# EUROPÄISCHE PATENTSCHRIFT

(11) **EP 1 393 006 B1**
(45) Veröffentlichungstag und Bekanntmachung des Hinweises auf die Patenterteilung: **05.07.2006**
(21) Anmeldenummer: 02718215.3
(22) Anmeldetag: 06.04.2002
(51) Int. Cl.: F24F 13/10, A62C 2/24, H02K 7/116, F16H 1/08

(54) **ELEKTROMOTORISCHE VERSTELLEINRICHTUNG**
ELECTROMOTIVE ADJUSTMENT DEVICE
DISPOSITIF DE REGLAGE A MOTEUR ELECTRIQUE

(30) Priorität: 27.04.2001 DE 20107326 U
(43) Veröffentlichungstag der Anmeldung: 03.03.2004
(73) Patentinhaber: RK Rose + Krieger GmbH & Co. KG Verbindungs- und Positioniersysteme, D-32423 Minden (DE)
(72) Erfinder: SCHUNKE, Kurt, 32427 Minden (DE); BUCHHOLZ, Bernd, 32369 Rahden (DE); PALM, Dieter, 33824 Werther (DE); BRUNS, Gerhard, 31675 Bückeburg (DE)
(74) Vertreter: Specht, Peter
(86) Internationale Anmeldenummer: PCT/EP2002/003837
(87) Internationale Veröffentlichungsnummer: WO 2002/088605

(56) Entgegenhaltungen:
- CH-A- 614 507
- US-A- 3 973 449
- US-A- 4 669 578
- US-B1- 6 186 471

## Beschreibung

Die Erfindung betrifft eine elektromotorische Verstelleinrichtung, insbesondere für verstellbare Klappen, mit einem Gehäuse, mit einem mit einem Abtriebszapfen versehenen Antriebsmotor und einem aus mehreren miteinander in Eingriff stehenden Rädern gebildeten Antriebszug.

Die in Frage kommende elektromotorische Verstelleinrichtung ist besonders in der Heizungs-, Klima- und Lüftungstechnik einsetzbar. Sie wird verwendet, um beispielsweise Klappen in eine Öffnungs- oder Schließstellung zu bringen. Die jeweilige Verstellbewegung richtet sich danach, zu welchem Zweck sie verwendet wird. So kann es beispielsweise notwendig sein, dass im Brandfalle die Klappen geöffnet oder geschlossen werden. Für derartige Fälle ist es vorgeschrieben, dass die dann notwendige Schwenkbewegung des Stellgliedes nicht von dem Antriebsmotor durchgeführt wird, sondern von einem Kraftspeicher, vorzugsweise von einer vorgespannten Feder, da dadurch sichergestellt ist, dass auch beim Ausfall des Antriebsmotors aufgrund der äußeren Umstände, wie zum Beispiel die erhöhte Temperatur, die notwendige Bewegung durchgeführt wird. In solchen Fällen wird der Kraftspeicher vorgespannt, wenn durch den Antriebsmotor das Stellglied von einer Grundstellung in die Betriebsstellung gebracht wird, in der das Stellglied im Normalfall verbleibt. Es kann jedoch auch notwendig sein, dass beispielsweise das Stellglied temperaturabhängig in relativ kurzen Zeitabständen in andere Stellungen verfahren wird.

Bei aus der gattungsbildenden CH-A-614507 und der gattungsbildenden US-A-4669578 bekannten elektromotorischen Verstelleinrichtungen ist auf den Abtriebszapfen des Antriebsmotors ein Stirnrad drehfest aufgesetzt. Der Teilkreis bzw. der Außendurchmesser eines solchen Rades ist deutlich größer ais der Durchmesser des Antriebszapfens. Daraus ergibt sich schon, dass auch die Zähnezahl entsprechend hoch ist, so dass in der ersten Stufe zur Herabsetzung der Motordrehzahl entweder ein Rad mit einer entsprechend hohen Zähnezahl mit dem auf den Abtriebszapfen aufgesetzten Rad in Eingriff stehen muss oder dass die Drehzahl dieses Rades noch verhältnismäßig hoch ist. Bei allen Lösungen ergeben sich relativ große Abmessungen für das Gehäuse der Verstelleinrichtung. Bekanntlich sind bei den in Rede stehenden Verstelleinrichtungen die Drehzahlen der Abtriebsglieder der Antriebszüge äußerst gering. Da jedoch die Einbauräume relativ klein sind, ist der Einsatz der bislang bekannten Verstelleinrichtungen entweder problematisch oder der Einbau ist sogar unmöglich. Ferner ist es notwendig, dass die bislang bekannten Verstelleinrichtungen an die Drehrichtung des Stellgliedes angepaßt werden, das heißt, für Links- und Rechtslauf ist eine elektrische Umschaltung notwendig.

Der Erfindung liegt die Aufgabe zugrunde, eine elektromotorische Verstelleinrichtung der eingangs näher beschriebenen Art so zu gestalten, dass die Abmessungen des Gehäuses gegenüber den bekannten Verstelleinrichtungen reduziert werden, und dass für beide Drehrichtungen des Stellgliedes keine elektrische Umschaltung notwendig wird.

Die gestellte Aufgabe wird gelöst, indem der Antriebsmotor ein bürstenloser Motor mit einem äußeren Rotor ist, dass der Abtriebszapfen des Antriebsmotors mit einer Evoloid-Verzahnung in Form eines Mehrzahnes, maximal eines Dreizahnes, versehen ist, und dass zumindest das damit in Eingriff stehende Rad des Antriebszuges ein schräg verzahntes Stirnrad ist.

Das mit dem Abtriebszapfen bzw. mit dem darauf aufgesetzten Rad in Eingriff stehende Rad ist nunmehr im Gegensatz zu den bekannten Ausführung ein schräg verzahntes Rad, so dass sich daraus die entsprechende Verzahnung des Abtriebszapfens des Antriebsmotors ergibt. Der Teilkreisdurchmesser der Verzahnung des Abtriebszapfens ist gegenüber den bekannten Ausführungen deutlich reduziert, so dass sich entweder bei gleichen Abmessungen des damit in Eingriff stehenden Rades ein größeres Verhältnis der Zähnezahlen ergibt, so dass die Reduzierung der Motordrehzahl entsprechend ist, so dass die nachfolgenden Räder des Antriebszuges im Durchmesser kleiner gehalten werden können. Alternativ dazu wäre es möglich, wenn die Drehzahlreduzierung wie bei den bekannten Verstelleinrichtungen vorgenommen wird, dass das mit dem Abtriebszapfen ein Eingriff stehende Rad eine deutlich geringere Zähnezahl enthält, so dass bereits dadurch die baulichen Abmessungen deutlich verringert werden.

Der bürstenlose Motor kann als verschleißarm, wenn nicht sogar als verschleißfrei angesehen werden. Zweckmäßigerweise ist der Antriebsmotor ein sogenannter Glockenläufermotor, das heißt, der Rotor steht außen und rotiert um den inneren feststehenden Kern.

Die Evoloid-Verzahnung ermöglicht es, dass die Zähnezahl des verzahnten Abtriebszapfens so gering wie möglich gehalten wird. Dadurch ergibt sich bereits die erwähnte Möglichkeit, entweder die Drehzahl bereits in der ersten Stufe deutlich herabzusetzen oder die Abmessungen zu verkleinern. Dieser Effekt ist zwar optimal, wenn der Abtriebszapfen des Antriebsmotors verzahnt wird, der Teilkreisdurchmesser wird jedoch auch gegenüber den herkömmlichen Ausführungen reduziert, wenn auf den Abtriebszapfen ein Rad mit der genannten Verzahnung aufgesetzt wird. Die weiteren Räder des Antriebszuges können schräg verzahnt sein, wobei jedoch auch ohne weiteres geradverzahnte Räder eingesetzt werden können.

In weiterer Ausgestaltung ist vorgesehen, dass das Abtriebsglied des Antriebszuges mit einer Welle, vorzugsweise einer Hohlwelle gekoppelt ist, und dass die Welle durch zwei einander gegenüberliegende Öffnungen des Gehäuses derart geführt ist, dass die Stirnenden der Wellen in Abhängigkeit von der Drehrichtung des angeschlossenen Stellgliedes wahlweise mit dem Stellglied verbindbar sind.

Im Gegensatz zu den bekannten Ausführungen ist es nunmehr möglich, dass durch den entsprechenden Einbau das Stellglied entweder sich im Uhrzeigersinn oder auch entgegen dem Uhrzeigersinn dreht, wenn der Motor strombeaufschlagt ist. Je nach der gewünschten Drehrichtung wird entweder das eine Stirnende oder das andere Stirnende mit dem Stellglied gekoppelt. Sofern das Abtriebsglied des Antriebszuges mit der Hohlwelle gekoppelt ist, ist diese zweckmäßigerweise mit einer Innenverzahnung oder einer Innenprofilierung ausgestattet, so dass eine formschlüssige Verbindung mit dem Stellglied oder einem Verbindungselement gekoppelt werden kann.

In weiterer Ausgestaltung ist vorgesehen, dass der Antriebszug zur Reduzierung der Motordrehzahl mindestens zwei Getriebestufen aufweist. Es werden dann zweckmäßigerweise Doppelzahnräder verwendet, wodurch die Anzahl der Bauteile so gering wie möglich gehalten wird. Zweckmäßigerweise sind die die Getriebestufen bildenden Räder an einem gemeinsamen Antriebsträger gelagert, an dem auch vorzugsweise der Antriebsmotor angeflanscht ist. Dadurch entsteht eine Baueinheit, die vormontiert werden kann, so dass alle Teile gut zugänglich sind. Diese Ausführung ist außerdem reparaturfreundlich. Da die vom Gehäuse abzutragenden Kräfte relativ gering bleiben, kann dieses relativ dünnwandig ausgeführt werden. Außerdem entsteht eine funktionsfähige Antriebseinheit, so dass gegebenenfalls sogar auf ein Gehäuse verzichtet werden kann.

In weiterer Ausgestaltung ist vorgesehen, dass der Antrieb mit einem Federelement ausgestattet ist, und dass die Verstellung des Stellgliedes in einer Richtung mittels des Federelementes erfolgt. Zweckmäßigerweise ist die Verstelleinrichtung mit einem Gehäuse ausgestattet, welches aus zwei Gehäusehälften besteht, wobei vorzugsweise die Trennebene in der Mitte liegt. Außerdem ist vorgesehen, dass der Motorflansch einstückig mit dem Antriebsträger ausgebildet ist. Dadurch entfallen zusätzliche Befestigungselemente. Außerdem wird die Anzahl der Teile noch weiter reduziert.

Anhand der beiliegenden Zeichnungen wird die Erfindung noch näher erläutert. Es zeigen:
- Figur 1: den erfindungsgemäßen Antrieb im montierten Zustand in perspektivischer Darstellung und
- Figur 2: die elektromotorische Verstelleinrichtung nach der Figur 1 mit teilweise aufgeschnittenem Gehäuse.

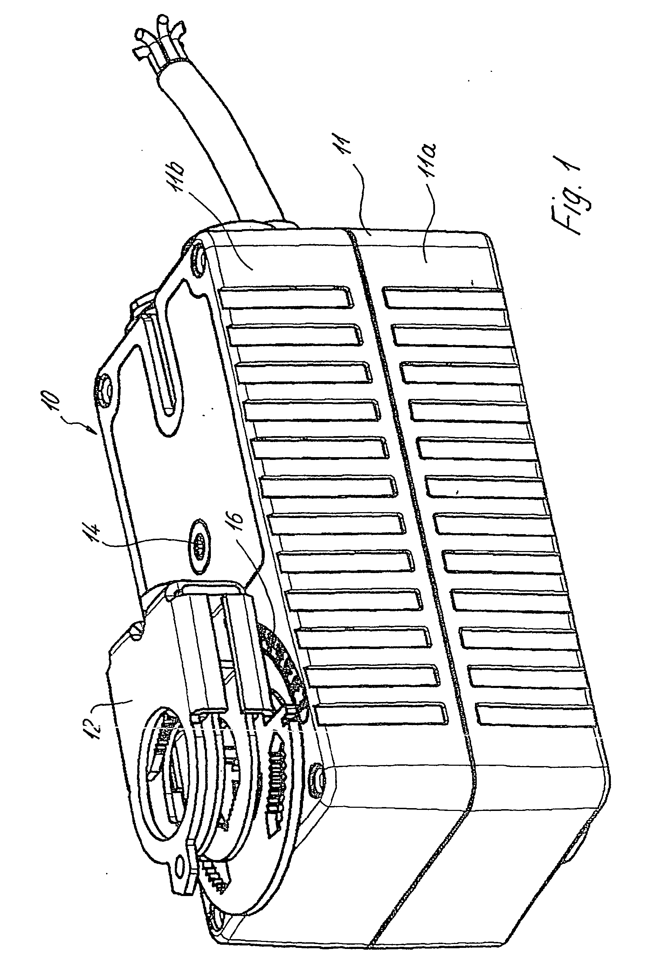

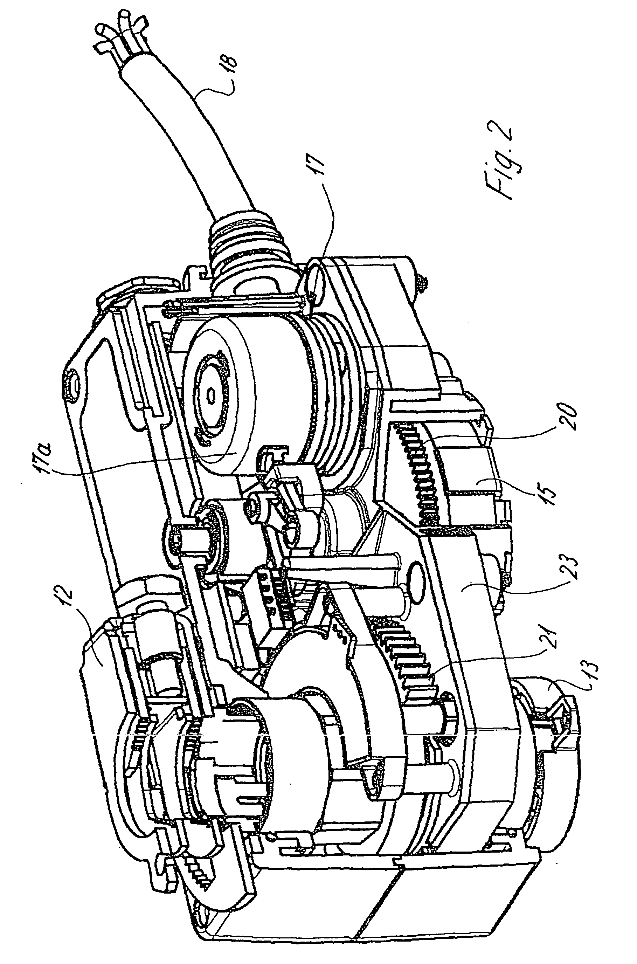

Die in den Figuren 1 und 2 dargestellte elektromotorische Verstelleinrichtung 10 ist mit einem Gehäuse 11 ausgestattet, welches aus den beiden Gehäuseteilen 11a und 11b in den Eckbereichen miteinander verschraubt sind. Das Gehäuse 11 ist quaderartig gestaltet und an den Längsseiten profiliert. Die Trennebenen der beiden Gehäuseteile 11a, 11b liegt etwa im mittleren Bereich, bezogen auf die Höhe. Gemäß den Darstellungen nach den Figuren 1 und 2 ist jedes Gehäuseteil 11a und 11b in einem Endbereich mit jeweils einem Anschlußteil 12, 13 ausgestattet, die gleichartig sind und womit die Verstelleinrichtung 10 an einer Einrichtung festgelegt werden kann, die mit dem zu verstellenden Stellglied ausgestattet ist. Aus Gründen der vereinfachten Darstellung ist die antriebstechnische Verbindung zwischen dem Abtriebsglied der elektromotorischen Verstelleinrichtung 10 und dem Stellglied nicht dargestellt. Die elektromotorische Verstelleinrichtung 10 ist mit einer von außen mittels eines entsprechenden Werkzeuges verdrehbaren Handbetätigungswelle 14 ausgestattet, um ein Federelement 15 zu spannen und um das Stellglied in eine Grundeinstellung zu bringen. Dazu ist jedes Gehäuseteil 11a, 11b mit einer Skala 16 ausgestattet, damit beispielsweise der Winkel als Grundstellung für eine zu verstellende Klappe angezeigt werden kann.

Die elektromotorische Verstelleinrichtung 10 ist mit einem bürstenlosen Antriebsmotor 17 ausgestattet, dessen Rotor außen angeordnet ist. Die Versorgung mit elektrischer Energie erfolgt durch ein mehradriges Kabel 18. Dem Rotor 17a des Antriebsmotors 17 ist eine nicht näher erläuterte Arretiervorrichtung 19 zugeordnet. Der verzahnte Abtriebszapfen oder ein darauf drehfest aufgesetztes Rad treibt ein Zahnrad 20 an, dessen Zähnezahl verhältnismäßig groß ist. Das Zahnrad 20 ist ein Doppelrad und das eine wesentlich geringere Zähnezahl aufweisende Rad treibt ein weiteres Zahnrad 21 mit einer relativ großen Anzahl von Zähnen an. Dieses Zahnrad 21 ist das Abtriebsglied des Antriebszuges und im dargestellten Ausführungsbeispiel ein Zahnsegment von 90°. In die Bohrung dieses Zahnrades 21 ist eine Hohlwelle 22 drehfest eingesetzt, bedingt durch die Profilierung, welches auch durch Bohrungen der beiden Gehäuseteile 11a und 11b geführt ist. Die Hohlwelle ist innen verzahnt, so daß eine formschlüssige Verbindung mit einem Koppelelement hergestellt werden kann, um das besagte Stellglied zu verstellen. Die den Antriebszug bildenden Räder bilden bei dem Ausführungsbeispiel zwei Getriebestufen. Sie sind außerdem an einem Antriebsträger 23 gelagert, an dem auch der Antriebsmotor 17a festgelegt ist. Die dargestellte elektromotorische Verstelleinrichtung in Form eines Getriebes ist so ausgelegt, daß in der Grundstellung des Stellgliedes das Federelement 15 vorgespannt ist. Die Verstellung erfolgt dann mittels des Antriebsmotors 17, wobei die Rückstellbewegung durch Entspannen des Federelementes 15 erfolgt. Dies hat den Vorteil, daß beispielsweise bei Erwärmung der Verstelleinrichtung beispielsweise im Brandfall und Ausfall des Antriebsmotors 17 oder der Stromzuführung sichergestellt ist, daß das Stellglied in die dann notwendige Stellung verfahren wird. Aus diesem Grunde sind die Bauteile der elektromotorischen Verstelleinrichtung und das Gehäuse 11 aus Metall gefertigt, beispielsweise aus Stahl oder Buntmetallen.

Die Erfindung ist nicht auf das dargestellte Ausführungsbeispiel beschränkt. Wesentlich ist, daß zur Erzielung von geringstmöglichen Abmessungen der Abtriebszapfen des Antriebsmotors 17 oder das darauf aufgesetzte Rad eine Evoloid-Verzahnung aufweisen und das damit in Eingriff stehende Rad eine Schrägverzahnung hat.

## Patentansprüche

1. Elektromotorische Verstelleinrichtung, insbesondere für verstellbare Klappen, mit einem Gehäuse (11), mit einem mit einem Abtriebszapfen versehenen Antriebsmotor (17) und einem aus mehreren miteinander in Eingriff stehenden Rädern gebildeten Antriebszug, **dadurch gekennzeichnet, dass** der Antriebsmotor (17) ein bürstenloser Motor mit einem äußeren Rotor (17a) ist, dass der Abtriebszapfen des Antriebsmotors (17) mit einer Evoloid-Verzahnung in Form eines Mehrzahnes, maximal eines Dreizahnes, versehen ist, und dass zumindest das damit in Eingriff stehende Rad (20) des Antriebszuges ein schräg verzahntes Stirnrad ist.

2. Elektromotorische Verstelleinrichtung nach Anspruch 1, **dadurch gekennzeichnet, dass** das Abtriebsglied (21) des Antriebszuges mit einer Welle, vorzugsweise einer Hohlwelle (22) gekoppelt ist, und dass die Welle (22) durch zwei einander gegenüberliegende Öffnungen des Gehäuses (11) derart geführt ist, dass die Stirnenden der Welle (22) in Abhängigkeit von der Drehrichtung des angeschlossenen Stellgliedes wahlweise mit dem Stellglied verbindbar sind.

3. Elektromotorische Verstelleinrichtung nach Anspruch 1 oder 2, **dadurch gekennzeichnet, dass** der Antriebszug zur Reduzierung der Motordrehzahl mindestens zwei Getriebestufen aufweist.

4. Elektromotorische Verstelleinrichtung nach einem oder mehreren der vorhergehenden Ansprüche 2 bis 3, **dadurch gekennzeichnet, dass** zumindest die die Getriebestufen bildenden Räder (20, 21) an einem gemeinsamen Antriebsträger (23) gelagert sind, an dem auch vorzugsweise der Antriebsmotor (17) angeordnet ist.

5. Elektromotorische Verstelleinrichtung nach einem oder mehreren der vorhergehenden Ansprüche 1 bis 4, **dadurch gekennzeichnet, dass** die Verstelleinrichtung (10) mit einem Federelement (15) ausgestattet ist, und dass die Verstellung des Stellgliedes in einer Richtung mittels des Federelementes (15) erfolgt.

6. Elektromotorische Verstelleinrichtung nach Anspruch 5, **dadurch gekennzeichnet, dass** zur Erzeugung einer Vorspannung des Federelementes (15) die Verstelleinrichtung (10) mit einer Handverstellwelle (14) ausgestattet ist.

7. Elektromotorische Verstelleinrichtung nach einem oder mehreren der vorhergehenden Ansprüche 1 bis 6, **dadurch gekennzeichnet, dass** das Gehäuse (11) aus zwei miteinander verschraubten Gehäuseteilen (11a, 11b) besteht, und dass die Trennebene vorzugsweise im Bereich der Mittelebene des Gehäuses (11) liegt.

8. Elektromotorische Verstelleinrichtung nach einem den Ansprüche 4 bis 7, **dadurch gekennzeichnet, dass** der Ahschraubflansch des Antriebsmotors (17) einstückig mit dem Antriebsträger (23) ausgebildet ist.

## Claims

1. Electromotive adjusting device, in particular for adjustable valves, having a housing (11), with a drive motor (17) which is provided with an output journal and a drive train which is formed from a plurality of gears which engage with one another, **characterized in that** the drive motor (17) is a brushless motor with an external rotor (17a), **in that** the output journal of the drive motor (17) is provided with an evoloid tooth system in the form of a multiple-tooth arrangement, at most a triple-tooth arrangement, and **in that** at least that gear (20) of the drive train which engages with the latter is an obliquely toothed spur gear.

2. Electromotive adjusting device according to Claim 1, **characterized in that** the output journal (21) of the drive train is coupled to a shaft, preferably a hollow shaft (22), and **in that** the shaft (22) is passed through two openings, which face one another, in the housing (11) in such a way that the ends of the shaft (22) can optionally be connected to the actuator as a function of the direction of rotation of the connected actuator.

3. Electromotive adjusting device according to Claim 1 or 2, **characterized in that** the drive train for reducing the rotational speed of the motor has at least two gear stages.

4. Electromotive adjusting device according to one or both of the preceding Claims 2 and 3, **characterized in that** at least the gears (20, 21) which form the gear stages are mounted on a common drive support (23) on which the drive motor (17) is preferably also arranged.

5. Electromotive adjusting device according to one or more of the preceding Claims 1 to 4, **characterized in that** the adjusting device (10) is equipped with a spring element (15), and **in that** the actuator is adjusted in one direction by means of the spring element (15).

6. Electromotive adjusting device according to Claim 5, **characterized in that** the adjusting device (10) is equipped with a manual adjusting shaft (14) for prestressing the spring element (15).

7. Electromotive adjusting device according to one or more of the preceding Claims 1 to 6, **characterized in that** the housing (11) comprises two housing parts (11a, 11b) which are screwed to one another, and **in that** the separating plane is preferably in the region of the centre plane of the housing (11).

8. Electromotive adjusting device according to one of Claims 4 to 7, **characterized in that** the screw-on flange of the drive motor (17) is integrally formed with the drive support (23).

## Revendications

1. , Dispositif de réglage à moteur électrique, en particulier pour des clapets réglables, avec un boîtier (11), comportant un moteur d'entraînement (17) muni d'un axe de sortie et un train d'entraînement formé de plusieurs pignons en prise les uns par rapport aux autres, **caractérisé en ce que** le moteur d'entraînement (17) est un moteur sans balais comportant un rotor externe (17a), **en ce que** l'axe de sortie du moteur d'entraînement (17) est muni d'une denture Evoloid sous la forme de plusieurs dents, au maximum de trois dents, et **en ce qu'**au moins le pignon (20), du train d'entraînement qui est en prise avec celui-ci est un pignon droit à denture oblique.

2. Dispositif de réglage à moteur électrique selon la revendication 1, **caractérisé en ce que** l'élément de sortie (21) du train d'entraînement est couplé à un arbre, de préférence un arbre creux (22) et **en ce que** l'arbre (22) est guidé par deux orifices opposés du boîtier (11) de telle sorte que les extrémités frontales de l'arbre (22) puissent être reliées au choix à l'élément de réglage en fonction du sens de rotation de l'élément de réglage raccordé.

3. Dispositif de réglage à moteur électrique selon la revendication 1 ou 2, **caractérisé en ce que** le train d'entraînement comporte, pour la réduction du régime du moteur, au moins deux rapports de démultiplication.

4. Dispositif de réglage à moteur électrique selon l'une quelconque ou plusieurs des revendications précédentes 2 à 3, **caractérisé en ce qu'**au moins les pignons (20, 21) formant les rapports de démultiplication sont logés sur un support d'entraînement commun (23) sur lequel est également disposé, de préférence, le moteur d'entraînement (17).

5. Dispositif de réglage à moteur électrique selon l'une quelconque ou plusieurs des revendications précédentes 1 à 4, **caractérisé en ce que** le dispositif de réglage (10) est équipé d'un élément élastique (15) et **en ce que** le réglage de l'élément de réglage se fait dans un sens au moyen de l'élément élastique (15).

6. Dispositif de réglage à moteur électrique selon la revendication 5, **caractérisé en que**, pour la création d'une précontrainte de l'élément élastique (15), le dispositif de réglage (10) est équipé d'un arbre de réglage manuel (14).

7. Dispositif de réglage à moteur électrique selon l'une quelconque ou plusieurs des revendications précédentes 1 à 6, **caractérisé en ce que** le boîtier (11) est composé de deux parties de boîtier (11a, 11b) vissées l'une à l'autre et **en ce que** le plan de jonction se trouve de préférence au niveau du plan médian du boîtier (11).

8. Dispositif de réglage à moteur électrique selon l'une quelconque des revendications 4 à 7, **caractérisé en ce que** la bride à visser du moteur d'entraînement (17) est réalisée d'un seul tenant avec le support d'entraînement (23).
